# EUROPÄISCHE PATENTANMELDUNG

(11) **EP 1 749 701 A1**
(43) Veröffentlichungstag der Anmeldung: **07.02.2007**
(21) Anmeldenummer: 05107168.6
(22) Anmeldetag: 03.08.2005
(51) Int. Cl.: B60R 16/02, H02J 7/14

(54) **Schaltungsanordnung für Rekuperationsenergie von Kraftfahrzeugen**

(71) Anmelder: Ford Global Technologies, LLC, Dearborn, MI 48126 (US)
(72) Erfinder: Surewaard, Erik, 4844 AT Terheijden (NL); Karden, Eckard, 52066 Aachen (DE)
(74) Vertreter: Dörfler, Thomas

(57) **Zusammenfassung**

Die vorliegende Erfindung betrifft eine Schaltungsanordnung für die Weiterleitung von Rekuperationsenergie eines Kraftfahrzeugs in das Versorgungsbordnetz. Dazu umfasst die Schaltungsanordnung wenigstens einen durch einen Antrieb betriebenen Generator (1) mit einer ersten und einer zweiten Ein-/Ausgangsseite (2,3), ein Rekuperationsnetz mit wenigstens jeweils einem Anschluss (9/10/14,15) auf jeder der zwei Ein-/Ausgangsseiten (2,3), einen Energiespeicher (4) in dem Rekuperationsnetz, eine Schalteinheit (5,6) auf einer Ein-/Ausgangsseite (2) mit wenigstens zwei parallelen Schaltlinien (7,8) und ein elektrisches Bauteil (11,12) jeweils zwischen zwei Schaltlinien (7,8), wobei das Bauteil (11,12) wenigstens einen Kondensator (11) und eine zu dem Kondensator (11) parallel geschaltete Diode (12) umfasst.

## Beschreibung

Die vorliegende Erfindung betrifft eine Schaltungsanordnung, insbesondere für Kraftfahrzeuge.

Die Energierückgewinnung in Form von elektrischem Strom bei Bremsvorgängen von Kraftfahrzeugen wird bereits seit vielen Jahren verfolgt. Durch Erhöhen des Sollwertes des Generators beim Bremsvorgang kann elektrische Energie aus der kinetischen Energie bei der Fahrzeugabbremsung gewonnen werden, was schließlich zu einem geringeren Verbrauch des Kraftfahrzeugs führt. Die durch die sogenannte Rekuperation rückgewonnene elektrische Energie kann dem Versorgungsbordnetz des Kraftfahrzeugs zugeführt und/oder in der Fahrzeugbatterie gespeichert werden.

Allgemein ist bei den Schaltungsanordnung die Rekuperationsleistung wesentlich höher ist als die durchschnittliche Generatorleistung im Normalbetrieb. Problematisch ist dabei eine rasche Veränderung der Netzspannung im Versorgungsbordnetz. Dies wirkt sich bei direkter Einspeisung der Rekuperationsenergie in das Versorgungsbordnetz durch eine Veränderung der Lüfterdrehzahl der Fahrzeugbelüftung oder der Lichtstärke der Beleuchtung für die Insassen des Fahrzeugs merklich aus.

Die DE 197 49 548 zeigt eine Schaltung zur Aufnahme durch Rekuperation zurückgewonnener elektrischer Energie. Die Rekuperationsenergie wird in einem Superkondensator gespeichert. Der Kondensator ist dazu parallel zur Batterie geschaltet. Nachteilig bei dieser Schaltung ist, dass die durch Rekuperation erzeugten hohen Spannungen von 16 V oder höher die Batterie mit einem üblichen oberen Ladungsgrenzwert von etwa 14,5 V überlasten und somit zerstören.

Die DE 102 30 384 beschreibt eine Schaltungsanordnung mit einem Antrieb und einem mechanisch mit dem Antrieb verbundenen Generator. Die Rekuperationsenergie wird ebenfalls in einem Superkondensator gespeichert. Dazu wird ein uni- oder bidirektionaler DC/DC-Wandler verwendet. Um für die Insassen des Fahrzeugs merkliche rasche Veränderung der Netzspannung im Versorgungsbordnetz zu vermeiden, soll die Netzspannung im Versorgungsbordnetz graduell erhöht werden.

Die Aufgabe der vorliegenden Erfindung liegt darin, eine Schaltung und ein Verfahren für eine Schaltung bereit zu stellen, wodurch die Speicherung und Übertragung der Rekuperationsenergie in das Versorgungsbordnetz des Kraftfahrzeugs weiter verbessert wird.

Erfindungsgemäß wird die Aufgabe durch eine Schaltungsanordnung gelöst, die wenigstens einen durch einen Antrieb betriebenen Generator mit einer ersten und einer zweiten Ein-/Ausgangsseite, ein Rekuperationsnetz mit wenigstens jeweils einem Anschluss auf jeder der zwei Ein-/Ausgangsseiten, einen Energiespeicher in dem Rekuperationsnetz, eine Schalteinheit auf einer Ein-/Ausgangsseite mit wenigstens zwei parallelen Schaltlinien, ein elektrisches Bauteil jeweils zwischen zwei Schaltlinien umfasst, wobei das Bauteil wenigstens einen Kondensator und eine zu dem Kondensator parallel geschaltete Diode aufweist.

Das elektrische Bauteil mit einem Kondensator und einer zu dem Kondensator parallel geschalteten Diode dient dazu, die Rekuperationsenergie kurzzeitig zwischen zu speichern. Dabei wird durch die Parallelschaltung der Diode zu dem Kondensator einer Umkehr der Polarisation, d.h. einer Negativentladung, entgegen gewirkt.

Zur besseren Speicherung der Menge durch den Bremsvorgang gewonnener elektrischer Energie kann vorgesehen sein, dass der Kondensator ein Superkondensator mit einer Vielzahl an Kondensatorzellen ist.

Die aus dem Bremsvorgang umgewandelte und gewonnene elektrische Energie kann sowohl zum besseren und ökonomischeren Aufladen der Batterie als auch zur Spannungsstabilisierung von spannungssensiblen Verbrauchern im Kraftfahrzeug verwendet werden.

Zweckmäßig ist es, einen, vorzugsweise ein-direktionalen, DC/DC-Wandler in dem Rekuperationsnetz zur Spannungsstabilisierung vorzusehen. Beispielsweise können an dem Anschluss der Schaltlinie mit dem DC/DC-Wandler spannungssensible Verbraucher des Kraftfahrzeugs angeschlossen werden.

In einer bevorzugten Ausführungsform ist der DC/DC-Wandler parallel zu dem elektrischen Bauteil geschaltet. Der DC/DC-Wandler kann ein ein-direktionaler Wandler sein und dient dazu, die Spannung für die an dem in dieser Linie befindlichen Anschluss angehängten spannungssensiblen Verbraucher zu stabilisieren. Dies ermöglicht zudem ein rascheres Ansprechen / Abfallen des Generators beim Bremsvorgang.

In einer anderen bevorzugten Ausführungsform ist der DC/DC-Wandler in Reihe nach der Schalteinheit und dem elektrischen Bauteil geschaltet. Dabei kann besonders bevorzugt der DC/DC-Wandler in der Schaltlinie hinter dem elektrischen Bauteil und vor einem Anschluss für das Versorgungsbordnetz oder sonstige Verbraucher eingeschliffen sein. Der DC/DC-Wandler ist ganz besonders bevorzugt ein ein-direktionaler Wandler und dient dazu, die Spannung der an Anschluss angehängten Verbraucher zu stabilisieren. Dies ermöglicht zudem ein rascheres Ansprechen / Abfallen der Spannung des Generators beim Bremsvorgang.

Alternativ zu einer Topologie mit einem DC/DC-Wandler kann zur Verringerung der Spannung auch ein Pulsbreiten-Modulator (PWM) verwendet werden.

Die Funktionsweise einer erfindungsgemäßen Schaltungsanordnung lässt sich wie folgt zusammenfassen: Bei einer beispielhaften Schaltungsanordnung mit zwei Schaltlinien in der Rekuperationsschaltung ist im normalen Stand- / Fahrbetrieb des Kraftfahrzeugs der Schalter in der ersten Schaltlinie mit nachgeschaltetem ein-direktionalen DC/DC-Wandler geschlossen und der Schalter in der zweiten Schaltlinie geöffnet. Ein zusätzlich in die Rekuperationsschaltung eingeschliffener DC/DC-Wandler wird dazu verwendet, den Kondensator zu entladen. Beim Bremsvorgang des Kraftfahrzeugs ist der Schalter in der ersten Schaltlinie mit nachgeschaltetem momo-direktionalen DC/DC-Wandler geöffnet und der Schalter in der zweiten Schaltlinie geschlossen. Abhängig von der nominellen Spannung des Kondensators und der Kapazität des Generators kann die Ausgangsspannung des Generators bzw. des Wandlers des Generators einen Spitzenwert von mehr als 16 V erreichen. Dabei wird durch die Parallelschaltung der Diode zu dem Kondensator eine Negativentladung vermieden.

Beispielsweise weist eine übliche 12 V-Kraftfahrzeugbatterie einen oberen Ladungsgrenzwert von etwa 14,5 V auf. Ladungswerte über diesem Grenzwert führen zum Ausgasen der Batterieflüssigkeit oder des Batteriegels, wodurch die Batterie zerstört wird. Die Differenz zwischen dem Spitzenwert des Generators von mehr als 16 V und dem Ladungsgrenzwert von 14,5 V der Batterie nimmt der (Super-)Kondensator durch Aufladung auf. Ein Ausgasen der Batterie wird somit verhindert bei gleichzeitiger maximaler Aufnahme der elektrischen Energie aus dem Bremsvorgang.

Ferner können am Anschluss in der ersten Schaltlinie spannungsunsensible Verbraucher, beispielsweise mit einem Maximum von 16 V oder höher, angeschlossen werden.

Die Erfindung wird nachfolgend anhand von vier Ausführungsbeispielen in gleichfalls vier Figuren beschrieben werden.

Es zeigen:
- Figur 1: eine erfindungsgemäße Schaltungsanordnung in einem ersten Ausführungsbeispiel ohne DC/DC-Wandler,
- Figur 2: eine weitere erfindungsgemäße Schaltungsanordnung in einem zweiten Ausführungsbeispiel ohne DC/DC-Wandler,
- Figur 3: eine erfindungsgemäße Schaltungsanordnung in einem dritten Ausführungsbeispiel mit einem in Reihe geschalteten DC/DC-Wandler und
- Figur 4: eine erfindungsgemäße Schaltungsanordnung in einem vierten Ausführungsbeispiel mit einem parallel geschalteten DC/DC-Wandler.

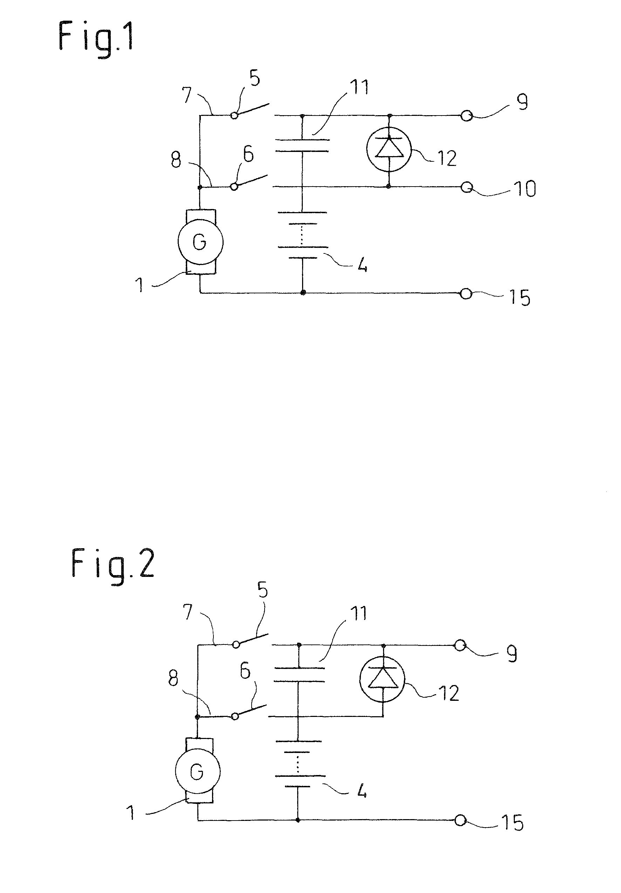

In Figur 1 ist in einem ersten Ausführungsbeispiel eine Schaltungsanordnung für Kraftfahrzeuge dargestellt. Die Schaltungsanordnung umfassend einen durch einen Antrieb betriebenen Generator 1, so dass der Generator eine erste und eine zweite Ein-/Ausgangsseite 2, 3 aufweist. Daran angeschlossen ist ein Rekuperationsnetz. Parallel zum Generator 1 ist ein Energiespeicher 4 in Form einer Autobatterie in das Rekuperationsnetz geschaltet. Ferner weist das Rekuperationsnetz auf einer Ein-/Ausgangsseite 2 eine Schalteinheit mit jeweils einem Schalter 5, 6 in zwei parallelen Schaltlinien 7, 8 auf. Die beiden Schaltlinien 7, 8 sind zwischen der Schalteinheit und ihren jeweiligen Anschlüssen 9, 10 über ein elektrisches Bauteil mit einander verbunden. Das Bauteil besteht aus einem Superkondensator 11, d.h. einem Kondensator mit einer oder mehreren Zellen, und einer zu dem Kondensator parallel geschalteten Diode 12. An Anschluss 9 sind Verbrauchern angeschlossen, die höhere Spannungen aushalten können, wie beispielsweise Sitzheizungen oder Scheibenheizungen.

Im Grundbetrieb des Kraftfahrzeugs ist Schalter 5 geöffnet und Schalter 6 geschlossen. Bei einem Bremsvorgang des Kraftfahrzeugs ist Schalter 5 geschlossen und Schalter 6 geöffnet. Die durch den Generator 1 erzeugte Spannung wird nach Aufladung des Kondensators 11 angehoben. Nach dem Ende des Bremsvorganges wird Schalter 5 wieder geöffnet und Schalter 6 wieder geschlossen.

An Anschluss eins angeschlossene Verbraucher entladen nach dem Bremsvorgang den Kondensator 11. Nach Entladung des Kondensators 11 schließt die Diode 12 und der Strom für die Verbraucher an Anschluss 9 werden vom Generator 1 und/oder der Batterie gespeist 4.

Alternativ zur Diode 12 kann ein sonstiger schaltbarer Halbleiter eingeschliffen sein.

Ausgehend von der Schaltung aus dem ersten Ausführungsbeispiel ist in dem zweiten Ausführungsbeispiel in der Schaltlinie 8 kein Anschluss 10 vorgesehen (Figur 2). Nur die Schaltlinie 7 weist einen Anschluss 9 auf.

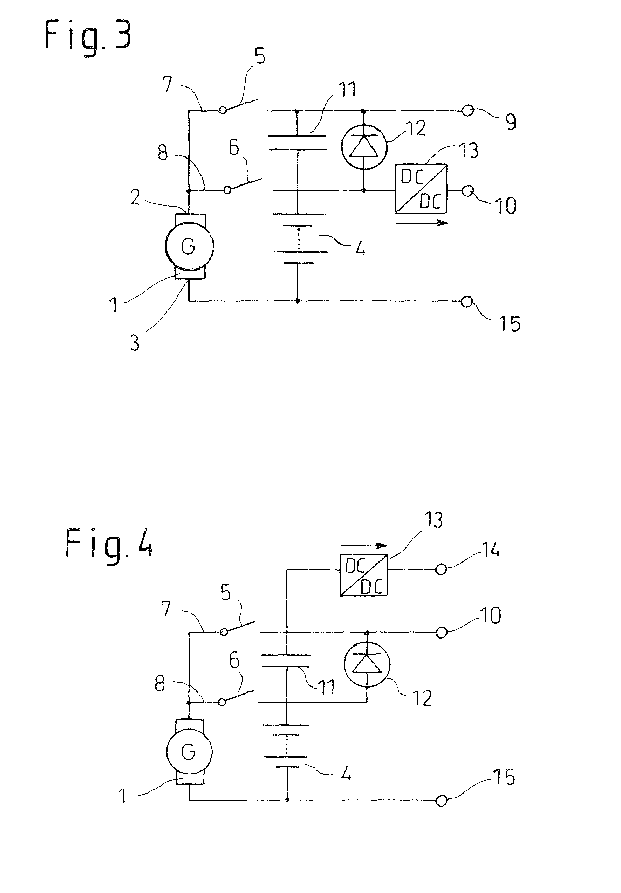

Wiederum ausgehend von der Schaltungsanordnung aus dem ersten Ausführungsbeispiel ist in dem dritten Ausführungsbeispiel in der Schaltlinie 6 zwischen dem elektrischen Bauteil und dem Anschluss 10 ein DC/DC-Wandler 13 angeordnet (Figur 3). Der DC/DC-Wandler 13 ist ein ein-direktionaler Wandler und dient dazu, die Spannung der an Anschluss 10 angehängten Verbraucher zu stabilisieren. Dies ermöglicht zudem ein rascheres Ansprechen / Abfallen der Spannung des Generators 1 beim Bremsvorgang.

Ausgehend von der Schaltungsanordnung aus dem zweiten Ausführungsbeispiel ist in dem vierten Ausführungsbeispiel in der Schaltlinie 7 zwischen dem Schalter 5 und dem elektrischen Bauteil ein Anschluss 14 mit einem zum Bauteil parallel geschalteten DC/DC-Wandler 13 angeordnet (Figur 4). Der DC/DC-Wandler 13 ist wiederum ein ein-direktionaler Wandler und dient dazu, die Spannung für die an Anschluss 14 angehängten spannungssensiblen Verbraucher zu stabilisieren. Dies ermöglicht zudem ein rascheres Ansprechen / Abfallen des Generators 1 beim Bremsvorgang.

### BEZUGSZEICHENLISTE

- 1: Generator
- 2: Ein/Ausgangsseite Generator
- 3: Ein/Ausgangsseite Generator
- 4: Batterie
- 5: Schalter 1
- 6: Schalter 2
- 7: Schaltlinie 1
- 8: Schaltlinie 2
- 9: Anschluss 2.1
- 10: Anschluss 2.2
- 11: Kondensator
- 12: Diode
- 13: DC/DC-Wandler
- 14: Anschluss 2.3
- 15: Anschluss 3

## Patentansprüche

1. Schaltungsanordnung, insbesondere für Kraftfahrzeuge, umfassend
- wenigstens einen durch einen Antrieb betriebenen Generator (1) mit einer ersten und einer zweiten Ein-/Ausgangsseite (2, 3),
- ein Rekuperationsnetz mit wenigstens jeweils einem Anschluss (9 / 10 / 14, 15) auf jeder der zwei Ein-/Ausgangsseiten (2, 3),
- ein Energiespeicher (4) in dem Rekuperationsnetz,
- eine Schalteinheit (5, 6) auf einer Ein-/Ausgangsseite (2) mit wenigstens zwei parallelen Schaltlinien (7, 8),
- einem elektrischen Bauteil (11, 12) jeweils zwischen zwei Schaltlinien (7, 8), wobei das Bauteil (11, 12) wenigstens einen Kondensator (11) und eine zu dem Kondensator (11) parallel geschaltete Diode (12) umfasst.

2. Schaltungsanordnung nach Anspruch 1, **dadurch gekennzeichnet, dass** der Kondensator (11) ein Superkondensator mit einer Vielzahl an Kondensatorzellen ist.

3. Schaltungsanordnung nach einem der Ansprüche 1 oder 2, weiter umfassend einen DC/DC-Wandler (13) in einer Schaltlinie (7 / 8).

4. Schaltungsanordnung nach Anspruch 3, **dadurch gekennzeichnet, dass** der DC/DC-Wandler (13) parallel zu dem elektrischen Bauteil (11, 12) geschaltet ist.

5. Schaltungsanordnung nach Anspruch 3, **dadurch gekennzeichnet, dass** der DC/DC-Wandler (13) in Reihe nach der Schalteinheit (5, 6) und dem elektrischen Bauteil (11, 12) geschaltet ist.

6. Schaltungsanordnung nach Anspruch 3, **dadurch gekennzeichnet, dass** die Schaltlinie mit DC/DC-Wandler einen weiteren Anschluss aufinreist.

7. Schaltungsanordnung nach Anspruch 3, **dadurch gekennzeichnet, dass** der DC/DC-Wandler ein ein-direktionaler DC/DC-Wandler ist.
